# EUROPEAN PATENT SPECIFICATION

(11) **EP 0 566 745 B1**
(45) Date of publication and mention of the grant of the patent: **02.08.1995**
(21) Application number: 92922991.2
(22) Date of filing: 06.11.1992
(51) Int. Cl.: H02K 49/04

(54) **EDDY CURRENT TYPE RETARDER**
BREMSE DER WIRBELSTROMBAUART
RALENTISSEUR DU TYPE A COURANTS DE FOUCAULT

(30) Priority: 08.11.1991 JP 100254/91 U; 21.10.1992 JP 307527/92
(43) Date of publication of application: 27.10.1993
(73) Proprietor: Isuzu Motors Limited, Shinagawa-ku, Tokyo 140 (JP)
(72) Inventor: KUWAHARA, Tohru Isuzu Motors Ltd. Kawasaki Works, Kawasaki-shi Kanagawa-ken 210 (JP)
(74) Representative: Niedmers, Ole, Dipl.-Phys.
(86) International application number: PCT/JP92/01444
(87) International publication number: WO 93/09590

(56) References cited:
- JP-A- 1 298 948
- JP-A- 4 088 867
- JP-U- 1 180 882

## Description

### FIELD OF ART

The present invention principally relates to an eddy current type reduction gear which assists a friction brake of a large sized vehicle, and more particularly to an eddy current type reduction gear which changes phases of pole pieces or ferromagnetic plates interposed between an inner peripheral surface of a brake drum and a number of permanent magnets juxtaposed at peripherally dual intervals opposing to the inner peripheral surface of the brake drum, thereby switching the mode of braking and non-braking.

### BACKGROUND OF TECHNOLOGY

In the eddy current type reduction gear disclosed in Japanese Patent Laid-Open No. 298948/1989 publication, a guide tube having a box-shape in section formed from a non-magnetic material is disposed interiorly of a brake drum, a number of pole pieces or ferromagnetic plates are connected at peripherally dual intervals to an outer peripheral wall of the guide tube, and permanent magnets (hereinafter merely referred to as magnets) opposed to the respective ferromagnetic plates are connected to a magnet supporting ring rotatably supported in a hollow portion of the guide tube, whereby a phase of the magnet supporting ring is merely changed by a half arrangement pitch of the ferromagnetic plates, thereby enabling switching the mode of braking and non-braking.

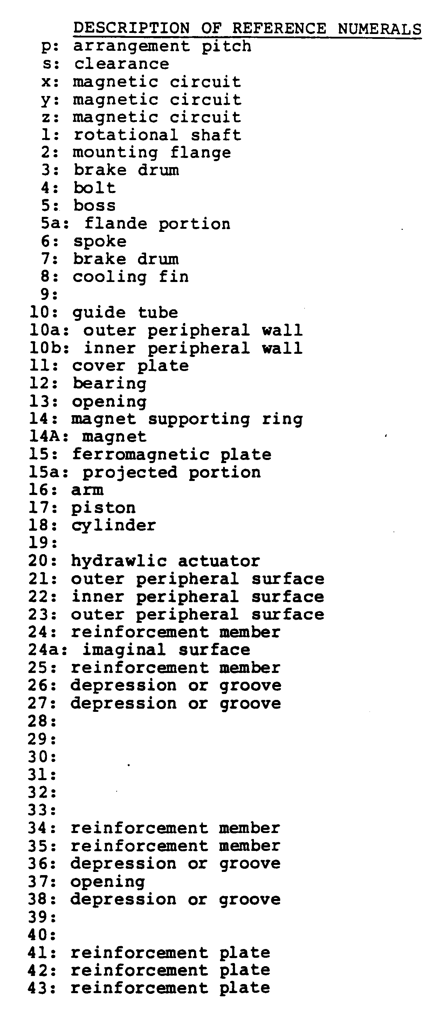

As shown in FIG. 13, in the aforementioned eddy current type reduction gear, magnets 14A on a magnet supporting ring 14 are juxtaposed at the same arrangement pitch "p" as the ferromagnetic plates 15 so that their polarities with respect to the ferromagnetic plates 15 are alternately different. At the time of non-braking, when the magnets 14A are displaced by a half arrangement pitch with respect to the ferromagnetic plates 15, the ferromagnetic plates 15 extend over the magnets 14A adjacent to each other which are different in polarity from each other to form a short-circuited magnetic circuit "y", shown by the solid line. However, the magnets 14A possibly exert magnetic flux or magnetic field on the brake drum 7 via a clearance "s" between the ferromagnetic plates 15 adjacent to each other to form a magnetic circuit "z", as indicated by the chain line. It is unfavorable at this time that when the rotating brake drum 7 crosses a leaked magnetic field, the brake drum 7 receives a dragging torque.

In view of the above-described problem, it is an object of the present invention to provide an eddy current type reduction gear which can effectively suppress leakage of magnetic field that leak from the magnets to the brake drum via the clearance between the ferromagnetic plates, thus overcoming a dragging torque at the time of non-braking, without impairing a braking capacity at the time of braking.

### DISCLOSURE OF THE INVENTION

It is an object of the present invention to provide an eddy current type reduction gear comprising a guide tube having a box-shape in section formed from non-magnetic material and disposed interiorly of a brake drum connected to a rotational shaft, a number of ferromagnetic plates being fastened at peripherally equal intervals to an outer peripheral wall of said guide tube, a magnet supporting ring being rotatably supported in a hollow portion of said guide tube, and permanent magnets being so fastened to said magnet supporting ring so that each magnet opposes a respective ferromagnetic plate and the polarity thereof changes alternately in the peripheral direction. According to a first solution, each permanent magnet is provided with a groove on a peripherally central portion of one of the inner and outer peripheral surfaces thereof. According to an alternative solution, as claimed in claim 4, each permanent magnet is provided with grooves on a peripherally central portion of opposed circumferential end surfaces thereof, each groove being fastened with a reinforcement member of a material magnetically weaker than said permanent magnet.

### OPERATION OF THE INVENTION

At the time of braking, ferromagnetic plates are wholly overlaid on magnets of a magnet supporting ring. A magnetic field of each magnet acts perpendicular to the ferromagnetic plates and the inner peripheral surface of the brake drum. When the rotating brake drum crosses the magnetic field, eddy current flow in the brake drum, and the brake drum receives a braking torque.

At the time of non-braking, when the magnet supporting ring is rotated by a half arrangement pitch of the pole pieces or ferromagnetic plate, a ferromagnetic plate straddles two magnets adjacent to each other which are different in polarity to form a short-circuited magnetic circuit between the ferromagnetic plate and the magnet supporting ring. At this time, a peripherally central portion of each magnet faces to a clearance between the ferromanetic plates. Since the central portion of the magnet is thin by the provision of a depression or groove, a spacing between the magnet and the brake drum is larger than other portions so that leakage of the magnetic field exerted to the brake drum from the magnets is extremely suppressed, and the brake drum is not subjected to a dragging torque.

### BRIEF DESCRIPTION OF THE DRAWINGS

FIG. 1 is a side view in section of an eddy current type reduction gear according to the present invention.

FIG. 2 is a partial front view in section, showing the relationship between ferromagnetic plates and magnets at the time of braking in the eddy current type reduction gear.

FIG. 3 is a partial front view in section, showing the relationship between ferromagnetic plates and magnets at the time of non-braking in the eddy current type reduction gear.

FIG. 4 is a front view in section, showing the relationship between ferromagnetic plates and magnets at the time of non-braking in the eddy current type reduction gear of the second embodiment according to the present invention.

FIG. 5 is a front view in section, showing a magnet of the third embodiment according to the present invention.

FIG. 6 is a front view in section, showing a magnet of the fifth embodiment according to the present invention.

FIG. 7 is a perspective view, showing a magnet of the fourth embodiment according to the present invention.

FIG. 8 is a front view in section, showing said magnet.

FIG. 9 is a front view in section, showing a magnet of the sixth embodiment according to the present invention.

FIG. 10 is a front view in section, showing a magnet of the seventh embodiment according to the present invention.

FIG. 11 is a front view in section, showing a magnet of the eighth embodiment according to the present invention.

FIG. 12 is a perspective view, showing a magnet of the ninth embodiment according to the present invention.

FIG. 13 is a front view in section, showing the relationship between ferromagnetic plates and magnets at the time of non-braking in a conventional eddy curent type reduction gear.

### BEST MODE FOR CARRYING OUT THE INVENTION

### Embodiment 1

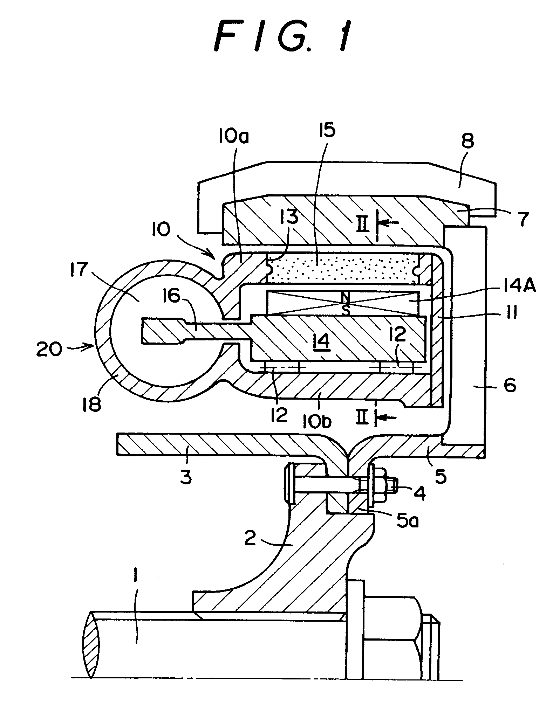

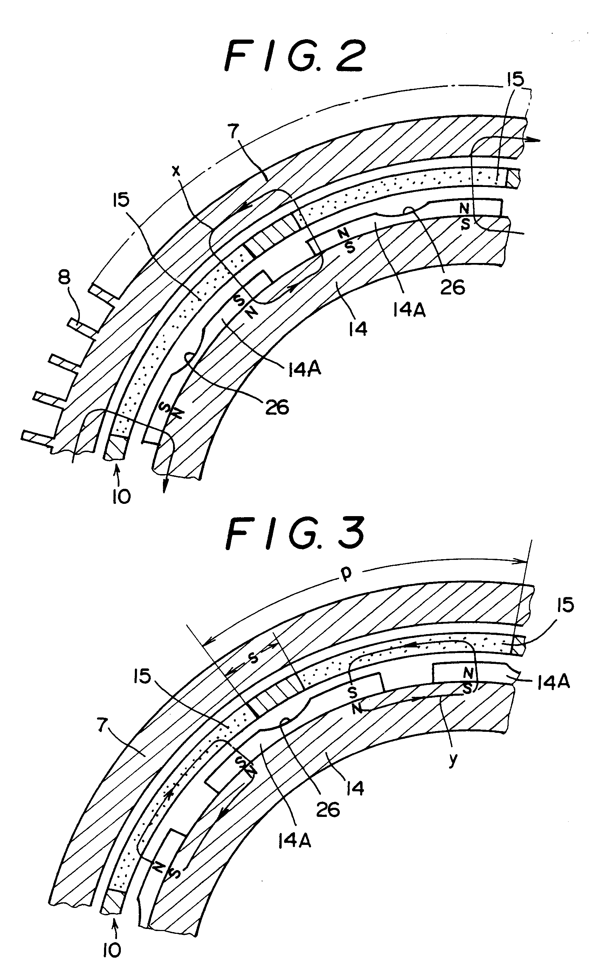

FIG. 1 is a side view in section of an eddy current type reduction gear according to the present invention, and FIG. 2 is a front view in section of the same. The eddy current type reduction gear according to the present invention comprises a brake drum 7 formed of a conductive material, the brake drum 7 being coupled to an output rotational shaft 1 of a vehicle speed change gear and the like, a stationary guide tube 10 formed from a non-magnetic material disposed interiorly of the brake drum 7, and a magnet supporting ring 14 rotatably supported in a hollow portion of the guide tube 10. In the brake drum 7, a flange portion 5a of a boss 5, together with an end wall portion of a brake drum 3 of a parking brake, is overlaid on a mounting flange 2, fixed by splines to a rotational shaft 1 and fastened by bolts 4 and nuts. The brake drum 7 provided with cooling fins 8 is coupled to spokes 6 radially extended from the boss 5.

The guide tube 10 having a box-shape in section is, for example, configured such that an annular cover plate 11 is coupled to a tubular body in the C-shape of in section. The guide tube 10 is secured, for example, to the wall of the gear box of a speed change gear by suitable means. A number of pole pieces or ferromagnetic plates 15 are fastened at peripherally equal intervals (see an arrangement pitch "p" shown in FIG. 3) to an outer peripheral wall 10a of the guide tube 10. Preferably, the ferromagnetic plates 15 are cast into the guide tube 10 when it is molded. The magnet supporting ring 14 is rotatably supported on a hollow portion, more specifically, an inner peripheral wall 10b of the guide tube 10 by means of bearings 12.

Preferably, three hydraulic actuators 20 are connected at peripherally equal intervals to a left end wall of the guide tube 10. The hydraulic actuator 20 is configured such that a piston 17 is fitted into a cylinder 18, and a rod projecting outward from the piston 17 is connected to an arm 16 projected from the magnet supporting ring 14 via a slit of a left end wall of the guide tube 10. While the magnet supporting ring 14 is normally and reversely rotated by a half arrangement pitch of the ferromagnetic plates 15 by the hydraulic actuator, it is to be noted that the magnet supporting ring 14 may be rotated by an electric motor and that the magnet supporting ring 14 is locked and the guide tube 10 is rotated instead.

As shown in FIG. 2, the magnet supporting ring 14 is formed from a magnetic material, and the magnets 14A opposed to the ferromagnetic plates 15 are so fastened that their polarities are peripherally alternately different.

According to the present invention, each magnet 14A is provided in a peripherally central portion of an outer peripheral surface thereof with a depression or groove 26 having a circular section. The provision of the groove 26 decreases a wall thickness of the central portion of the magnet 14A, increases a spacing between the central portion of the magnet 14A and the brake drum 7 and weakens the magnetic field leakage to the brake drum 7 from the central of the magnet 14A compared with the other portions.

The operation of the eddy current type reduction gear according to the present invention will be described below. As shown in FIG. 2, at the time of braking, one magnet 14A is wholly opposed to one ferromagnetic plate 15 to exert a magnetic field on the brake drum 7 via the ferromagnetic plate 15. When the rotating brake drum 7 crosses the magnetic field, eddy current flow in the brake drum 7, and the brake drum 7 receives a braking torque. At this time, there is generated a magnetic circuit "x" from the magnet 14A via the ferromagnetic plate 15, the brake drum 7, the adjacent ferromagnetic plate 15, the adjacent magnet 14A to the magnet supporting ring 14. The central portion of the magnet 14A is thin in wall thickness by the presence of the groove 26 but the braking capacity at the time of braking is hardly affected.

At the time of non-braking, when the magnet supporting ring 14 is rotated by a half arrangement pitch p/2 of the ferromagnetic plate 15 by the hydraulic actuator 20, two magnets 14A different in polarity are opposed on the ferromagnetic plate 15, as shown in FIG. 3. A short-circuited magnetic circuit "y" is generated between each ferromagnetic plate 15 and the magnet supporting ring 14, and the magnet 14A does not exert magnetic field on the brake drum 7.

At the time of non-braking, the central portion having the groove 26 of each magnet 14A faces to a clearance "s" between the ferromagnetic plates 15 adjacent to each other. However, magnetic field that leak from the magnet 14A to the brake drum 7 via the clearance "s" is extremely weakened and the brake drum 7 rarely receives a dragging torque, due to the fact that the central portion of the magnet 14A is thin in wall thickness and that the spacing between the outer peripheral surface of the central portion of the magnet 14A and the inner peripheral surface of the brake drum 7 is longer than the other portions.

### Embodiment 2

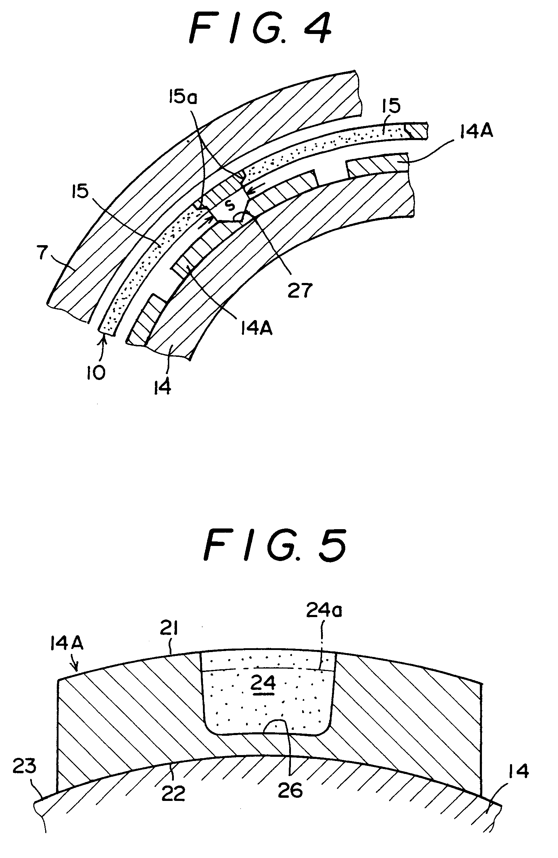

A groove provided in the central portion of the magnet 14A is not limited to a circular section but a groove 27 of V-shape section may also be employed, as shown in FIG. 4. In the embodiment shown in FIG. 4, if an arrangement is employed in which the width of the groove 27 having a V-shape section is made to be slightly narrow, an inner peripheral portion of a peripheral end edge portions of the ferromagnetic plate 15 is provided with a projected portion 15a to a peripheral direction, and a clearance "s" between the ferromagnetic plates 15 is made to be narrow by the projected portion 15a, leakage of magnetic field to the brake drum 7 is further reduced.

### Embodiment 3

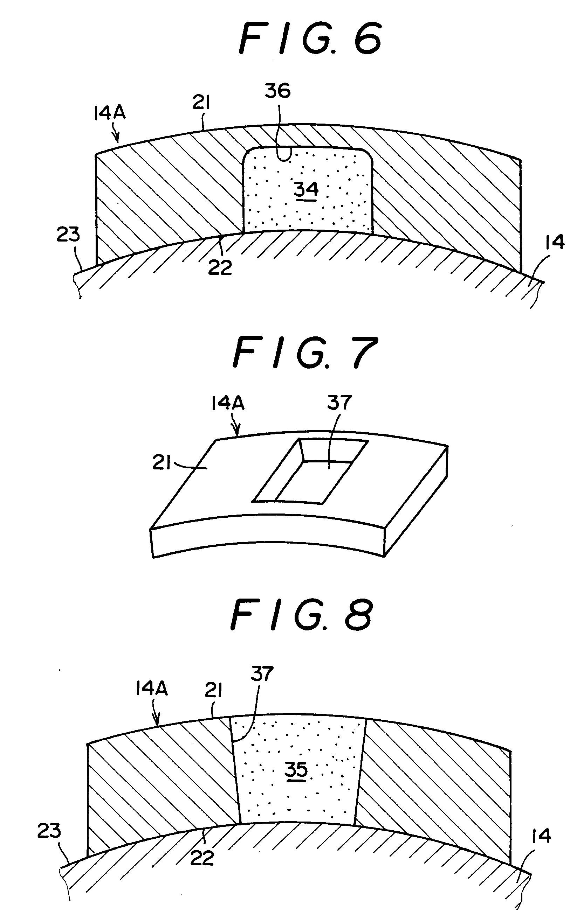

In the embodiment shown in Fig. 5, each magnet 14A is porvided with a groove-shaped depression 26 in a peripherally central portion of an outer peripheral surface 21, the depression 26 being extended in an axial direction (in an axial direction of the brake drum). A reinforcement member 24 of non-magnetic material or magnetic material weaker than the magnet 14A is joined within the depression 26 by means of enbedding or the like. In the illustrated embodiment, the reinforcement member 24 is fully embedded to form an outer surface continuous to the outer peripheral surface 21. However, for the purpose of reducing a weight, the depression 26 need not be fully embedded as shown by an imaginal surface 24a in the drawing, in consideration of a degree of reinforcement.

More specifically, the magnet 14A is constructed by pre-molding from a powder of magnet material into a shape having the depression 26, and then it is filled in the depression 26 with a powder of reinforcement member of non-magnetic material comprised of copper, ceramics (carbide, nitride, and boride), etc., or mixture, weakened magnetic property, of said non-magnetic material and magnetic material comprised of oxide (including a ferrite family) and sintered into a curved block in shape of an arc.
Alternatively, the reinforcement member may be joined with the depression 26 by the followings. After the magnet 14A has been produced into a curved block having the depression 26, it is casted a non-magnetic metal such as copper into the depression, or filled and hardened a fiber reinforced plastic (FRP) or a fiber reinforced metal (FRM) into the depression 26. The magnet 14A is magnetized (formed into a magnet) before or after it is fastened on the magnet supporting ring 14.

The depression 26 enlarges the magnetic gap between the peripherally central portion of the magnet 14A and the brake drum 7 and makes a magnetic field influencing from the peripherally central portion of the magnet 14A to the brake drum 7 weaker than that of other portions. Since the reinforcement member 34 is joined with the depression 26, the mechanical strength of the magnet 14A increases, and in particular, there occurs no crack in an intermediate portion of the magnet 14A due to the magnetic repulsion force generated between the opposite ends of the magnet, during magnetising or after magnetized.

### Embodiment 4

In the embodiment shown in Fig. 6, the magnet 14A is provided with an axially extending groove-shaped depression 36 in a peripherally central portion of an inner peripheral surface 22, and a reinforcement member 34 similar to the embodiment shown in Fig. 5 is fastened within the depression 36 by a method similar to the embodiments previously described, thus the magnet is formed into a curved block in the form of an arc.

### Embodiment 5

In the embodiments shown in Figs. 7 and 8, the magnet 14A is provided, in place of the depression, with a rectangular opening 37 which extends perpendicular to and through the outer peripheral surface 21 or peripheral wall, and a reinforcement member 35 similar to the embodiment shown in Fig. 5 is fastend within the opening 37 by a method similar to the embodiments previously described, thus the magnet is formed into a curved block in the form of an arc. In case of a thick magnet 14A, the magnet may be provided with a rectangular opening which extends perpendicular to (extended in an axial direction of the brake drum) and through the side walls, and a reinforcement member is fastened within the opening.

### Embodiment 6 to 8

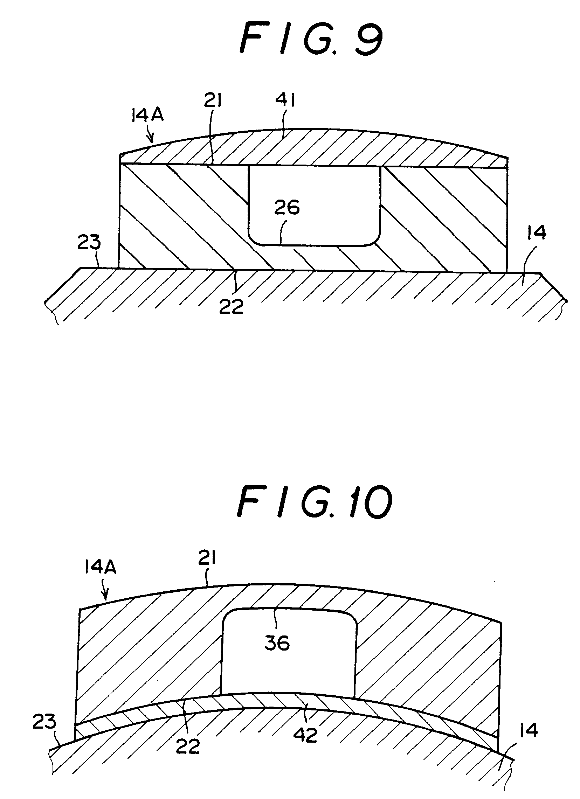

In the embodiments shown in Figs. 9 to 11, the magnet 14A is superposed a reinforcement plates 41 to 43 formed of copper, oxide (including a ferrite family) having magnetic property, fiber reinforced plastic (FRP), fiber reinforced metal (FRM), etc. on the outer peripheral surface 21 or the inner peripheral surface 22 respectively, in place of embedding a reinforcement member within the depression or opening, so as to cover depressions 26 and 36 and an opening 37 and is fastened by adhesives, bolts or the like. Particularly, If an iron plate is used for the reinforcement plate, it is facilitated to assemble the plate and finish the outer surface of the plate by machining.

In the embodiment shown in Fig. 9, the magnet 14A is provided with a depression 36 in the outer peripheral surface 21, and a reinforcement plate 41 is superposed and fastened on the outer peripheral surface 21 so as to cover the depression 36. The magnet 14A is pre-molded into a rectangular parallelepiped provided with a depression 26, and thereafter an iron plate as the reinforcement plate 41 is fastened on the outer peripheral surface 21 by adhesives, stainless bolts or the like. The magnet 14A has fastened its inner peripheral surface 22 on the flat outer peripheral surface 23 in the shape of a regular polygon of a magnet supporting ring 14, and thereafter the outer surface of the reinforcement plate 41 is finished into the peripheral surface by mechanical grinding or the like.

In the embodiment shown in Fig. 10, the magnet 14A is provided with a depression 36 in the inner peripheral surface 22, and a reinforcement plate 42 is superposed and fastened on the inner peripheral surface 22 so as to cover the depression 36.

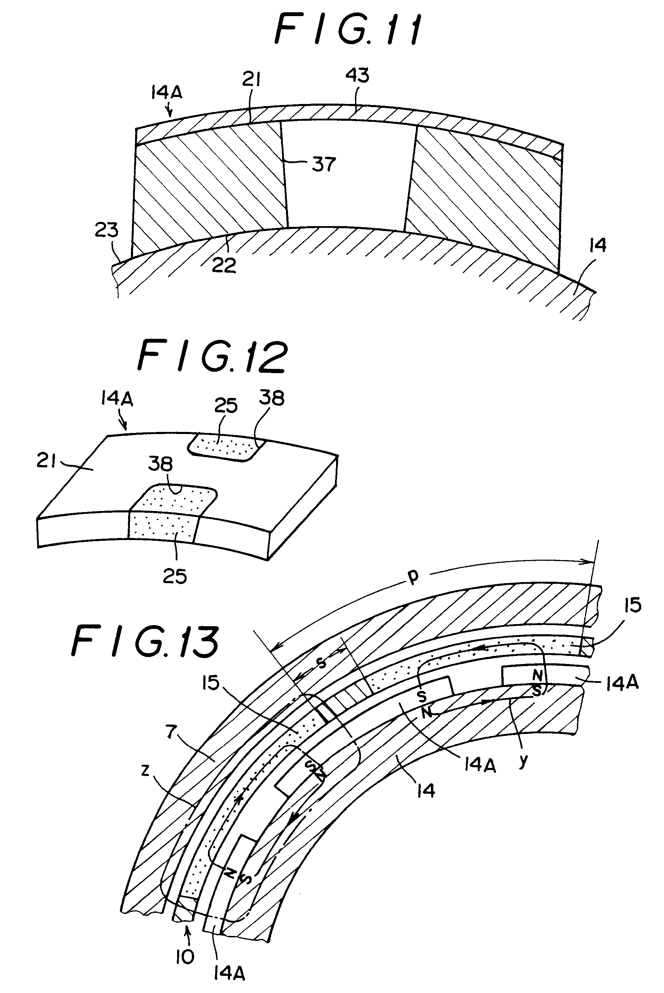

In the embodiment shown in Fig. 11, the magnet 14A is provided with an opening 37 in a peripherally central portion similar to the embodiment shown in the Fig. 7, and a reinforcement plate 43 is superposed and fastened on the outer peripheral surface 21 so as to cover the opening 37.

Also in the embodiments 4 to 8 described above, since the magnet 14A is provided with the depressions 26 and 36 and the opening 37 in the peripherally central portion thereof respectively, the magnetic property of the peripherally central portion of the magnet 14A becomes weaker than other portions, leakage of magntic field influencing from the magnet 14A to the brake drum 7 during a period of non-braking becomes weak, and the drag torque acting on the brake drum is suppressed. Since the reinforcement members 34 and 35 and the reinforcement plates 41 to 43 are fastened on the depressions 26 and 36 and the opning 37, respectively, the mechanical strength of the magnet 14A increases, and no possible crack occurs while the magnet 14A is magnetized, thus exhibiting the stable braking performance for long periods of time.

### Embodiment 9

In the enbodiment shown in Fig. 12, the magnet 14A is provided at the opposite circumferential end walls with depressions or grooves 38, and a reinforcement member 25 formed of copper, oxide (including a ferrite family) having magnetic property, ceramics, fiber reinforced plastics (FRP), fiber reinforced metal (FRM) and the like is fastened within the depressions 38.

### INDUSTRIAL APPLICABILITY

As described above, the eddy current type reduction gear according to the present invention is useful as a brake unit which assists a friction brake of a large sized vehicle, and particularly as a brake unit of the type in which the modes of braking and non-braking are switched by rotation of the magnet supporting ring, the unit having a small drag torque caused by the leakage of magnetic field and being suitable to be mounted in a narrow mounting space.

### ADVANTAGEOUS EFFECTS OF THE INVENTION

As desribed above, according to the present invention, a guide tube having a box-shape in section formed of a non-magnetic material is disposed interiorly of a brake drum connected to a rotational shaft, a number of ferromagnetic plates are fastened to the outer peripheral wall of the guide tube in a peripheraly and equally spaced relation, magnets opposed to the ferromagnetic plates are fastened to a magnetic supporting ring rotatably supported in an inner space of the guide tube, and a depression is provided in a peripherally central portion of an outer peripheral surface of each magnet. With this arrangement, the following advantageous effects are obtained.
(a) During a priod of non-braking, the central portion of each magnet faces to a gap between the ferromagnetic plates adjacent to each other, the central portion of each magnet is thin in wall-thickness and a spacing between the central portion of each magnet and the brake drum is wide. Therefore, the intensity of the magnetic field that leaks from the central portion of each magnet to the brake drum via the clearance between the ferromagnetic plates adjacent to each other is extremely weak. Accordingly, the drag torque infuencing from the magnet to the brake drum can be disregarded, thus preventing the loss of power.
(b) If the magnet is provided with a reinforcement member or a reinforcement plate, even if the depression of the magnet is made to be deepened, the mechanical strength is not affected. The magnet can be light-weighted and the magnetic property of the peripherally central portion of the magnet can be further weakened.

## Claims

1. An eddy current type reduction gear comprising a guide tube (10) having a box-shape in section formed from non-magnetic material and being disposed interiorly of a brake drum (7) connected to a rotational shaft (1), a number of ferromagnetic plates (15) being fastened at peripherally equal intervals to an outer peripheral wall (10a) of said guide tube (10), a magnet supporting ring (14) being rotatably supported in a hollow portion of said guide tube (10), and permanent magnets (14A) being fastened to said magnet supporting ring (14) so that each magnet opposes a respective ferromagnetic plate (15) and the polarity thereof changes alternately in the peripheral direction, characterized in that each permanent magnet (14A) is provided with a groove (26, 27, 36) on a peripherally central portion of one of the inner and outer peripheral surfaces thereof.

2. An eddy current type reduction gear according to claim 1, a reinforcement member (24, 25, 34, 35) of a material magnetically weaker than said permanent magnet being provided in said groove (26, 27, 36) on said permanent magnet.

3. An eddy current type reduction gear according to claim 1, a reinforcement member (41, 42, 43) for covering said groove (26, 27) being layered and fastened on said one surface (21 or 22) of said permanent magnet.

4. An eddy current type reduction gear comprising a guide tube (10) having a box-shape in section formed from non-magnetic material and being disposed interiorly of a brake drum (7) connected to a rotational shaft (1), a number of ferromagnetic plates (15) being fastened at peripherally equal intervals in the outer peripheral wall (10a) of said guide tube (10), a magnet supporting ring (14) being rotatably supported in a hollow portion of said guide tube (10), and permanent magnets (14A) being connected to said magnet supporting ring (14) so that each magnet opposes a respective ferromagnetic plate (15) and the polarity thereof changes alternately in the peripheral direction characterized in that, each permanent magnet (14A) is provided with grooves (38) on a peripherally central portion of opposed circumferential end surfaces thereof, each groove (38) being fastened with a reinforcement member (25) of a material magnetically weaker than said permanent magnet (14A).

## Patentansprüche

1. Wirbelstrombremse, umfassend ein Führungsrohr (10), das einen kastenförmigen Querschnitt aus nicht-magnetischem Werkstoff aufweist und innerhalb einer Bremstrommel angeordnet ist und mit einer drehbaren Welle verbunden ist, wobei eine Mehrzahl ferromagnetischer Platten mit in Umfangsrichtung gleichen Abständen zu einer an der äußeren Außenseite befindlichen Wand (10 a) des Führungsrohres (10) befestigt ist, und daß ein Magnethaltering (14) drehbar in einem hohlen Abschnitt des Führungsrohres (10) gehalten wird und Permanentmagnete (14A) am Magnethaltering (14) befestigt sind, so daß jeder Magnet einer jeweiligen ferromagnetischen Platte (15) gegenübersteht und deren Polarität sich abwechselnd in Umfangsrichtung ändert, dadurch gekennzeichnet, daß der Permanentmagnet (14A) mit einer Vertiefung (26, 27, 36) auf einem äußeren zentralen Teil auf einer der inneren und äußeren Außenflächen versehen ist.

2. Wirbelstrombremse nach Anspruch 1, dadurch gekennzeichnet, daß ein Verstärkungselement (24, 25, 34, 35) aus einem magnetischen Werkstoff, der weicher als der Permanentmagnet ist, in der Vertiefung (26, 27, 36) auf dem Permanentmagneten vorgesehen ist.

3. Wirbelstrombremse nach Anspruch 1, bei der ein Verstärkungselement (41, 42, 43) zur Abdeckung der Vertiefung (26, 37) auf einer Oberfläche (21 oder 22) des Permanentmagneten diese beschichtend befestigt ist.

4. Wirbelstrombremse, umfassend ein Führungsrohr (10), das einen kastenförmigen Querschnitt aus nicht-magnetischem Werkstoff aufweist und innerhalb einer Bremstrommel angeordnet ist und mit einer drehbaren Welle (1) verbunden ist, wobei eine Mehrzahl ferromagnetischer Platten (15) mit in Umfangsrichtung in gleichen Abständen in der äußeren Außenwand (10A) des Führungsrohres (10) befestigt ist, und daß ein Magnethaltering (14) drehbar in einem hohlen Teil des Führungsrohrs (10) gehalten wird und Permanentmagnete (14A) mit der Magnethalterung (14) verbunden sind, so daß jeder Magnet einer jeweiligen ferromagnetischen Platte (15) gegenübersteht und deren Polarität sich abwechselnd in Umfangsrichtung ändert, dadurch gekennzeichnet, daß jeder Permanentmagnet (14A) mit Vertiefungen (38) auf einem äußeren zentralen Teil auf gegenüberliegenden kreisförmigen Endflächen versehen ist, wobei jede Vertiefung (38) mit einem Verstärkungselement aus einem Werkstoff versehen ist, der weicher als der des Permanentmagneten (14A) ist.

## Revendications

1. Ralentisseur du type à courants de Foucault comprenant un tube guide (10) à section en forme de boîte formé à partir d'un matériau non magnétique et disposé à l'intérieur d'un tambour de frein (7) relié à un arbre rotatif (1), une pluralité de plaques ferromagnétiques (15) étant fixées à intervalles égaux selon la périphérie à une paroi périphérique extérieure (10a) dudit tube guide (10), une bague porte-aimants (14) étant supportée avec faculté de rotation dans une partie creuse dudit tube guide (10), et des aimants permanents (14A) étant fixés à ladite bague porte-aimants (14) de sorte que chaque aimant est en regard d'une plaque ferromagnétique (15) respective et que leur polarité change de manière alternée dans la direction de la périphérie, caractérisé en ce que chaque aimant permanent (14A) est muni d'une gorge (26, 27, 36) sur une partie centrale périphérique de l'une de ses surfaces périphériques intérieure et extérieure.

2. Ralentisseur du type à courants de Foucault selon la revendication 1, un élément de renforcement (24, 25, 34, 35) d'un matériau magnétiquement plus faible que ledit aimant permanent étant disposé dans ladite gorge (26, 27, 36) dudit aimant permanent.

3. Ralentisseur du type à courants de Foucault selon la revendication 1, un élément de renforcement (41, 42, 43) destiné à recouvrir ladite gorge (26, 27) étant superposé et fixé à ladite une surface (21 ou 22) dudit aimant permanent.

4. Ralentisseur du type à courants de Foucault comprenant un tube guide (10) à section en forme de boîte formé à partir d'un matériau non magnétique et disposé à l'intérieur d'un tambour de frein (7) relié à un arbre rotatif (1), une pluralité de plaques ferromagnétiques étant fixées à intervalles égaux selon la périphérie sur la paroi périphérique extérieure (10a) dudit tube guide (10), une bague porte-aimants (14) étant supportée avec faculté de rotation dans une partie creuse dudit tube guide (10), et des aimants permanents (14A) étant fixés à ladite bague porte-aimants (14) de sorte que chaque aimant est en regard d'une plaque ferromagnétique (15) respective et que leur polarité change de manière alternée dans la direction de la périphérie, caractérisé en ce que chaque aimant permanent (14A) est muni de gorges (38) sur une partie centrale périphérique de ses surfaces d'extrémité circonférentielle opposées, un élément de renforcement (25) d'un matériau magnétiquement plus faible que ledit aimant permanent (14A) étant fixé dans chaque gorge (38).
